# EUROPÄISCHE PATENTSCHRIFT

(11) **EP 2 137 960 B1**
(45) Veröffentlichungstag und Bekanntmachung des Hinweises auf die Patenterteilung: **17.10.2018**
(21) Anmeldenummer: 08734372.9
(22) Anmeldetag: 14.03.2008
(51) Int. Cl.: H04N 5/225, H04N 5/232, H04N 7/18, H04N 19/46, H04N 19/61

(54) **ÜBERWACHUNGSANORDNUNG**
SURVEILLANCE SYSTEM
DISPOSITIF DE SURVEILLANCE

(30) Priorität: 15.03.2007 DE 102007013239
(43) Veröffentlichungstag der Anmeldung: 30.12.2009
(73) Patentinhaber: Mobotix AG, 67722 Winnweiler (DE)
(72) Erfinder: BORCHERS, Klaus, 67731 Otterbach (DE); HUBRICH, Ralf, 6687 Ramstein-Miesenbach (DE)
(74) Vertreter: Vossius & Partner Patentanwälte Rechtsanwälte mbB
(86) Internationale Anmeldenummer: PCT/DE2008/000432
(87) Internationale Veröffentlichungsnummer: WO 2008/110158

(56) Entgegenhaltungen:
- WO-A-2007/060497
- JP-A- 2000 324 474
- US-A1- 2006 187 305
- US-B1- 6 675 386
- US-B2- 7 071 968

## Beschreibung

Die vorliegende Erfindung betrifft das oberbegrifflich Beanspruchte und befasst sich somit mit der Überwachung bestimmter Bereiche durch Kameras.

Überwachungskameras werden heute in größerem Umfang eingesetzt. Dabei ist es im Regelfall erwünscht, die Anzahl von Kameras, die zur Überwachung bestimmter Bereiche eingesetzt werden müssen, gering halten zu können. Die Überwachung soll dabei gleichwohl oftmals große räumliche Bereiche erfassen können und es müssen auch von bestimmten kritischen Bereichen hochaufgelöste Bilder zur Verfügung gestellt werden. Als beispielhaft seien hier Flughäfen oder Bahnhöfe genannt, die großflächig überwacht werden müssen, wobei dann aber einzelne, einem Überwachungsdienst verdächtig vorkommende Personen so hoch aufgelöst erfasst werden können, dass zum Beispiel das Gesicht erkenn- und gegebenenfalls identifizierbar ist. Vergleichbare Situationen finden sich auch an anderen, typisch öffentlichen Plätzen wie Kaufhäusern und dergleichen.

Es ist zunächst vorgeschlagen worden, dass Überwachungsanordnungen mit Kameras ausgerüstet werden, die geneigt und geschwenkt werden können, um in eine bestimmte Richtung zu blicken, und die zugleich einen Zoom aufweisen, um den Bereich, in den dann geblickt wird, mit größerer Auflösung erfassen zu können. Dies erfordert jedoch, eine Kamera mit Motoren zur Neigungs- und Zoomverstellung ausrüsten zu müssen, was Systeme schwer, teuer und anfällig macht.

Daher wurde auch schon vorgeschlagen, einen hochauflösenden Bildsensor zu verwenden und mit diesem einen sehr großen Bereich durch ein Weitwinkel- beziehungsweise Fischaugenobjektiv zu erfassen. Die hohe Auflösung der dabei verwendeten Bildsensoren erlaubt es, in dem aufgenommenen Bild zu schwenken und Details digital zu vergrößern. Die typische Schwenk-, Neige- und Zoombewegung einer Kamera, die gebräuchlich als PTZ-Steuerung (Pan-, Tilt-, Zoom-Steuerung) bezeichnet wird, ist demnach im Stand der Technik bereits softwareseitig realisiert worden.

Problematisch ist dabei allerdings zunächst, dass Weitwinkelobjektive, insbesondere Fischaugenobjektive, stark verzerrte Bilder erzeugen. Prinzipiell ist es jedoch bei bekannter Geometrie der optischen Verzerrung möglich, eine Entzerrung vorzunehmen. Die entsprechenden Algorithmen sind bekannt.

Es ist auch im Stand der Technik bekannt, das verzerrt aufgenommene Bild an eine Zentrale übertragen. In der Zentrale kann dann die softwareseitige PTZ-Bildbereichsauswahl vorgenommen werden und bei bekannter Linsengeometrie kann eine Entzerrung vorgenommen werden. Nachteilig hierbei ist allerdings, dass sehr große Datenmengen zu bearbeiten sind, was einen erheblichen Übertragungs- und Rechenaufwand erfordert. Es ist auch schon vorgeschlagen worden, zur Vermeidung dieses Problems lediglich die verzerrten Ausschnitte zu übertragen.

Dabei ist aber eine Entzerrung nicht mehr möglich. Gerade im Hinblick darauf, dass die Ausschnitte übertragen werden, um eine Erkennung von Details zu ermöglichen, ist dies aber vor allem in Bildrandbereichen äußerst unbefriedigend.

**Aus der** JP 2000-324474 **ist es bekannt, vom Bild einer Fischaugenlinse nur einen jeweiligen festen Ausschnitt zu übertragen und an einem gewünschten Wiedergabeort zu entzerren.**

**Aus der** US-PS 6,675,386 B1 **ist eine Vorrichtung zur Übertragung verschiedener Life-Videoströme über das Internet bekannt. Es soll die Übertragung an Benutzer mit unterschiedlichen Endgeräten ermöglicht werden.**

**Aus dem Dokument D2 sind ein digitales Videobildgebesystem und Techniken zur effizienten Transformierung verformter Videobilder in rechteckige Videobilder unter Echtzeitverfolgung von Personen und Objekten bekannt.**

**Aus** US 7,071,968 **ist eine Vorrichtung zur Steuerung des Aufnehmens von Bildern eines Objektes bekannt, wobei eine Entzerrung eines mit einer Fischaugenkamera aufgenommenen Bildes für jedes einer Vielzahl von Bildelementen erfolgen soll und die jeweiligen verzerrungskompensierten digitalen Daten individuell übertragen werden sollen.**

**Aus** WO 2007/060497 A2 **ist ein interaktiver Weitwinkelvideoserver bekannt, bei welchem der Server anforderungsgemäß für Clients jeweilige Segmente einer Videoquelle extrahiert, komprimiert und die Segmente an den Client überträgt, wo Segmentdaten durch 3D-Projektion lokal zur Anzeige umgerechnet werden.**

**Ein Problem besteht darin, dass die Entzerrung von verzerrten Bildern aufwändig ist, was dazu führt, dass eine Entzerrung auf der Bildaufnahmeseite vor Übertragung häufig unerwünscht ist, und dass eine Übertragungsrate im Regelfall beschränkt ist. Wünschenswert ist es, trotz dieser Begrenzungen einen Strom qualitativ hochwertiger Videobilder bereitstellen zu können.**

Es wäre wünschenswert, eine Überwachungsanordnung anzugeben, in der mit geringem Aufwand eine Überwachung möglich ist.

Die Aufgabe der vorliegenden Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Damit schlägt die Erfindung zunächst eine Überwachungsanordnung mit einem Bildaufnahmemittel zur Aufnahme optisch verzerrter Bilder und einem Übertragungsmittel zur Übertragung von Bildinformationen aus dem Bildaufnahmemittel an ein Bildausschnitte der optisch verzerrt aufgenommenen Bilder entzerrt wiedergebendes Wiedergabemittel vor, wobei vorgesehen ist, dass das Übertragungsmittel zur ausschnittsweisen Übertragung verzerrter Bilder und zur Mitübertragung von eine Bildausschnittsentzerrung ermöglichender Zusatzinformation ausgebildet ist, um im Wiedergabemittel eine Entzerrung zu ermöglichen.

Eine wesentliche Erkenntnis ist somit darin zu sehen, dass nicht mehr in einer Kamera ein Bild komplett entzerrt werden muss, um dann vollständig übertragen zu werden; vielmehr ist es möglich, durch einen nur geringen zusätzlichen Übertragungsaufwand über die Information eines zu übertragenden Bildausschnittes hinaus eine Entzerrung entfernt von der Kamera beziehungsweise dem Bildaufnahmemittel zu ermöglichen. Dies erlaubt einerseits, die Kamera mit einer signifikant geringeren Rechenleistung ausstatten zu können. Weiter wird es möglich, die Übertragungsrate beziehungsweise die für eine Übertragung benötigte Bandbreite erheblich zu reduzieren.

Damit ist insgesamt in vielen Fällen bereits eine Energieeinsparung deshalb gegeben, weil die Entzerrung ein rechen- und damit energieintensiver Vorgang ist und oftmals Bilder beziehungsweise Bildausschnitte aus Überwachungskameras nur zur Dokumentation aufgezeichnet werden, ohne permanent betrachtet werden zu müssen. Da somit ein Wegschreiben nichtentzerrter Bilder ohne Nachteile möglich wird und diese nichtentzerrten Bilder, wie üblich, ohne besondere Vorkommnisse wieder gelöscht werden können, kann auf diese Weise ein nicht unerheblicher Rechenaufwand eingespart werden und zugleich sichergestellt werden, dass gleichwohl durch die mitübertragene Zusatzinformation, über welche die Bildausschnittsentzerrung ermöglicht wird, im Bedarfsfall die Bildentzerrung ermöglicht wird.

Das Bildaufnahmemittel wird in einer besonders bevorzugten Variante einen adressierbaren Bildsensor aufweisen, das heißt einen Bildsensor, bei dem einzelne Pixel oder einzelne Pixelgruppen separat ansprechbar sind. Dies ermöglicht das zwischenspeicherfreie Ansprechen. Bevorzugt ist es, wenn der Bildsensor so adressierbar ist, dass die Pixel zeilen- und spaltenweise angesprochen beziehungsweise ausgelesen werden können. Besonders bevorzugt ist die Verwendung von CMOS-Sensoren. Es ist aus dem Vorstehenden einsichtig, dass das Bildaufnahmemittel bevorzugt digital die optisch verzerrten Bilder aufnimmt.

Die Verzerrung wird in einer typischen Anwendung durch die Verwendung sehr starker Weitwinkelobjektive hervorgerufen werden; typisch sind zum Beispiel Weitwinkelobjekte mit mehr als 45° Sichtwinkel, zunehmend auch mit über 60° gut einsetzbar. Die Vorteile ergeben sich in noch stärkerem Maß bei Winkeln um oder über 90°, insbesondere bei Weitwinkelobjektiven mit einem Sichtwinkel größer als 160°; derartige Weitwinkelobjektive werden typisch als "Fischaugenobjektive" bezeichnet. Besonders bevorzugt ist die Erfindung bei starker Verzerrung, wie sie ab ca. 90° auftritt. Die Verwendbarkeit mit Fischaugenobjektiven ist deshalb von besonderer Bedeutung, weil durch sie mit nur wenigen Kameras sehr große Bereiche überwacht werden können. Da aufgrund der vorliegend ermöglichten, nur ausschnittsweisen Übertragung und gegebenenfalls auch nur ausschnittsweisen Entzerrung der Gesamtaufwand für die Betrachtung von Bildausschnitten gering ist, kann zudem ein sehr hochauflösender Bildsensor verwendet werden, ohne dass dadurch eine unproportional hohe Rechen- oder Übertragungslast auftritt. Es ist einsichtig, dass die Erfindung bei besonders hochauflösenden Bildern demnach besonders bevorzugt ist. Die Anwendung mit Sensoren über 1, 2 besonders bevorzugt über 3 Megapixel ist daher zu erwähnen.

Auch ist das Bildaufnahmemittel zur wiederholten Aufnahme bewegter Bilder insbesondere mit einer Bildwiederholfrequenz, die ausreicht, um Bewegungen zu erkennen, zu betreiben. Dies ist bevorzugt.

Das Übertragungsmittel selbst wird die Bildinformationen über einen typisch bandbreitenbegrenzten Kanal übertragen, das heißt einen Kanal, auf dem die Übertragung von Daten auf Grund von entweder Kostenbetrachtungen und/oder zur Ermöglichung der Kommunikation zwischen noch anderen Geräten als nur der Zentrale und einem aktuell zu betrachtenden Bildaufnahmemittel begrenzt ist. Erwähnt sei insbesondere die Verwendung mit bandbreitenbegrenzten Kanälen und vor allem Übertragungskanälen von Funknetzen wie LAN, WLAN, Bluetooth, UMTS, GSM.

Überraschenderweise ist die Übertragung komprimierter Bildinformationen ohne weiteres möglich. Auch wenn nur Teile eines Bildes übertragen werden, können diese mit per se bekannten Kompressionsverfahren für die Übertragung komprimiert werden und es kann dann eine Entzerrung der am Wiedergabemittel zu decodierenden, das heißt entkomprimierenden Bilddaten erfolgen.

Es sei darauf hingewiesen, dass es möglich ist, die übertragene Bildinformation zwischenzuspeichern, bevor sie wiedergegeben wird. Die Speicherung von Bildinformationen kann in entzerrter oder nichtentzerrter Form erfolgen. Bevorzugt ist die Speicherung in nichtentzerrter Form zusammen mit der Zusatzinformation, die die Bildausschnittsentzerrung ermöglicht. Andernfalls ist es möglich, vor dem Einspeichern eine Entzerrung vorzunehmen und dann die entzerrten Bilddaten zur Anzeige zu bringen, was aber für reine Dokumentationszwecke nicht sinnvoll ist. Auf die Möglichkeit der Speicherung komplett übertragener, verzerrter Gesamtbilder anstelle von Teilausschnitten und das Mitabspeichern mitübertragener, zur Entzerrung benötigter Informationen sei explizit im Rahmen der Erfindung hingewiesen.

In einer bevorzugten Variante ist eine bidirektionale Kommunikation über das Übertragungsmittel ermöglicht, so dass insbesondere Steuerinformation an das Bildaufnahmemittel übertragen werden kann. Die Steuerinformation kann neben Angaben betreffend den physikalischen Kamerabetrieb wie zur Vorgabe einer Blende oder einer Bildwiederholfrequenz auch und vor allem die Information umfassen, die zur Bestimmung eines oder mehrerer gewünschter Bildausschnitte erforderlich ist; es können insbesondere PTZ-Parameter definierbar sein, die von einer virtuellen Verschwenkung des Blickes in dem Gesamtbild und einem Hinein- oder Herauszoomen in eine Szene, die vollständig erfasst wird, ausgehen. Es wird also in einem bevorzugten Betriebsmodus der erfindungsgemäßen Überwachungsanordnung durch ein Wiedergabemittel eine Bestimmung der PTZ-Parameter oder von Teilen davon vorgenommen. Dabei wird bevorzugt zumindest ein Parameter aus der Gruppe Schwenkwinkel, Neigewinkel und Zoomfaktor bestimmt. Dies kann durch Verschieben eines mittels Maus oder Joystick beweglichen Cursors in einem Großbild geschehen oder auch zum Beispiel durch Tastaturbefehle, wobei dann Information betreffend einen nächsten gewünschten Bildausschnitt über das Übertragungsmittel an das Bildaufnahmemittel übertragen wird.

Es ist möglich, insbesondere bei im Wiedergabemittel bekannter Geometrieverzerrung aus den PTZ-Parametern direkt die xy-Adressen eines auszulesenden Sensorbereiches des Bidlaufnahmemittels zu bestimmen. Die xy-Adressen des Sensorbereiches können absolut bestimmt werden, wenn die Sensorgröße im Wiedergabemittel bekannt ist; insbesondere andernfalls ist auch ohne weiteres die Bestimmung von relativen Koordinaten, zum Beispiel "17 % links, 23 % unten" möglich zur Vorgabe eines gewünschten Ausschnitts beziehungsweise Ausschnittbeginns.

Alternativ und/oder zusätzlich wird am Bildaufnahmemittel anhand der übertragenen Parameter ein gewünschter Bildausschnitt bestimmt, was etwa bei CMOS-Bildsensoren dergestalt geschehen kann, dass ein bestimmter Zeilen- und Spaltenbereich ermittelt wird, der den aktuellen Schwenk- und Neigeparametern entspricht, und eine Auflösung der Pixel im Hinblick auf einen eingestellten Zoom-Parameter durch eventuelles Zusammenfassen einzelner Pixel zu Pixelbereichen vorgenommen wird, um dann entsprechende Bilddaten zusammen mit Information darüber, um welche Zeilen und Spalten es sich handelt, an eine Zentrale zu übertragen. Die Information über die übertragenen Zeilen und Spalten kann beispielsweise durch Angabe der ersten und letzen übertragenen Spalte und der ersten und letzen übertragenen Zeile übertragen werden; alternativ ist auch etwa die Übertragung einer ersten Spalte und einer ersten Zeile zusammen mit der Breite des zu übertragenden Spaltenbereiches und der Breite des zu übertragenden Reihenbereiches möglich. Auf das Bestehen weiterer Alternativen wird verwiesen.

Alternativ wäre eine Angabe möglich, aus der ersichtlich ist, wie weit die Bereichsmitte von einem Koordinatenursprung wie der Sensormitte oder einem Sensoreckpunkt entfernt ist. Aus all solchen Angaben kann hergeleitet werden, wo sich der Bildausschnitt in dem Gesamtbild befindet. Im übrigen ist es auch möglich, vom Wiedergabemittel her entsprechende Anforderungsbefehle an das Bildaufnahmemittel zu senden.

Durch Bezugnahme auf gegebenenfalls kameraspezifische, am Wiedergabemittel vorgesehene, beispielsweise eingespeicherte Geometriekorrekturdaten kann dann eine Entzerrung vorgenommen werden. Es sei in diesem Zusammenhang darauf hingewiesen, dass es möglich ist, wiederholt, insbesondere periodisch oder einmalig, etwa zu einer Initialisierung, die zur Entzerrung benötigte Information vom Bildaufnahmemittel an ein Wiedergabemittel zu übertragen. Eine solche Übertragung von zur Entzerrung benötigter Information kann auch dann erfolgen, wenn eine neue Bildaufnahmedatei abgespeichert wird. Hier ist es möglich, die Information in einem Dateiheader oder dergleichen mitabzulegen. Dies erlaubt es, eine dedizierte Entzerrung für unterschiedliche Bildaufnahmemittel vorzunehmen. Die Kalibrationsdaten für ein gegebenes Bildaufnahmemittel können dabei bevorzugt zunächst am Bildaufnahmemittel abgelegt werden. Wenn demnach Fischaugenobjektive verwendet werden, die auf Grund von Fertigungstoleranzen von Kamera zu Kamera auf unterschiedliche Weise verzerren, so wird gleichwohl in einer Wiedergabezentrale eine jeweils passende Entzerrung ermöglicht.

Wie erwähnt ist es möglich, die vorliegende Erfindung auch dann anzuwenden, wenn die zu übertragenden, noch unentzerrten Bilder komprimiert werden sollen. Eine Bildkompression kann auf unterschiedliche Weise vorgenommen werden. Hingewiesen sei beispielsweise auf eine Kompression eines einzelnen Bildes unabhängig davon, was nachfolgende oder vorangegangene Bilder an Information enthalten. Erwähnt seien kachelartige Kompressionen entsprechend dem JPEG-Standard. Alternativ und/oder zusätzlich ist es möglich, auf vorangegangene und/oder, insbesondere bei Zwischenspeicherung von Bildern, nachfolgende Bilder Bezug zu nehmen, um nicht bei jedem Bild die vollständige Übertragung aller Pixel oder komprimierten Pixel vornehmen zu müssen, sondern vielmehr ein Schwergewicht auf die Übertragung von Differenzen zwischen aufeinanderfolgenden Bilder vorzunehmen.

Es sei erwähnt, dass insbesondere eine Codierung wie in frühren Anmeldungen der vorliegenden Anmelderin beschrieben, möglich ist (die früher beschriebenen Kompressionsverfahren der Anmelderin sind mittlerweile als MxPEG-Codierung eingeführt).

Es ist auch bevorzugt, wenn das Übertragungsmittel mehrere Bildausschnitte von ein und demselben Bildaufnahmemittel simultan übertragen kann. Es wird ersichtlich sein, dass in solchen Fällen gleichfalls erhebliche Vorzüge aus der vorliegenden Erfindung erhalten werden können und jeder einzelne Bildausschnitt entsprechend der vorhergehend beschriebenen Vorgehensweise übertragen werden kann. Dabei sei darauf hingewiesen, dass es möglich ist, eine zur Entzerrung benötigte Kalibrierinformation gegebenenfalls nur ein Mal vom Bildaufnahmemittel für beide Bildausschnittsströme zu übertragen.

Die Erfindung wird im Folgenden nur beispielsweise anhand der Zeichnung beschrieben. In dieser ist gezeigt durch:

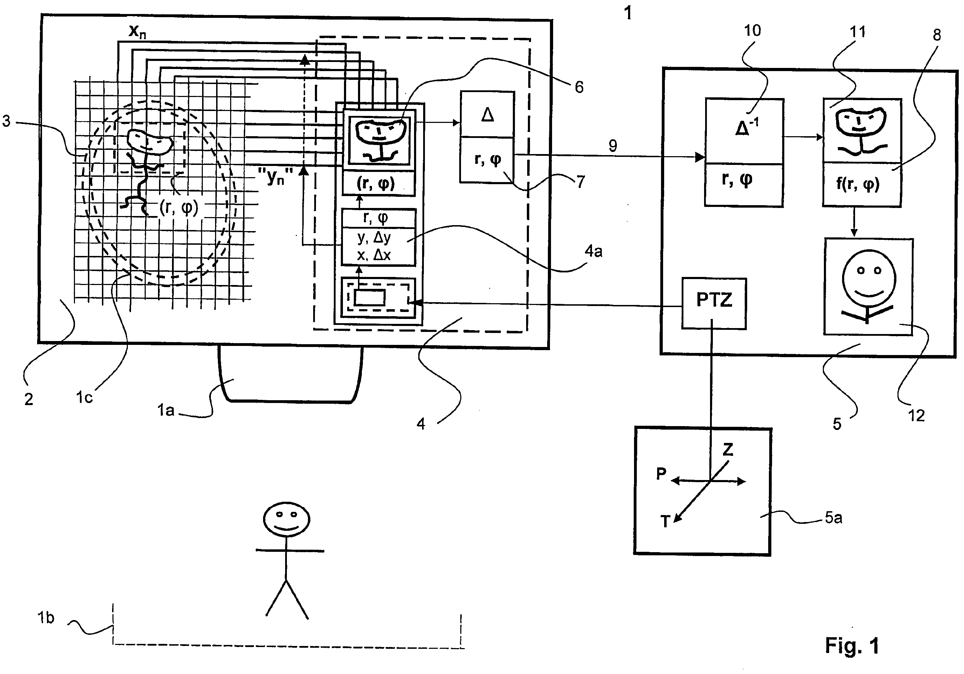

- Fig. 1: eine Überwachungsanordnung nach der vorliegenden Erfindung.

Fig. 1 umfasst eine allgemein mit 1 bezeichnete Überwachungsanordnung 1, ein Bildaufnahmemittel 2 zur Aufnahme optisch verzerrter Bilder, vgl. Bezugszahl 3, hier dargestellt durch die stark verzerrte Abbildung einer Person, und ein Übertragungsmittel 4 zur Übertragung von Bildinformation aus dem Bildaufnahmemittel an ein Bildausschnitte der optisch verzerrt aufgenommenen Bilder entzerrt wiedergebendes Bildwiedergabemittel 5, wobei das Übertragungsmittel 4 zur ausschnittsweisen Übertragung verzerrter Bilder, vgl. Bezugszahl 6, und zur Mitübertragung von eine Bildausschnittsentzerrung ermöglichenden Zusatzinformation 7 ausgebildet ist, um im Wiedergabemittel 5 eine Entzerrung zu ermöglichen, vgl. Bezugszahl 8.

Die Überwachungsanordnung 1 ist im vorliegenden Fall mit einer einzelnen Kamera gebildet, die ein Fischaugenobjektiv 1a mit einem Sichtwinkel nahe 180° aufweist, welches ein Bild eines zu überwachenden Bereiches 1b auf einen CMOS-Sensor 1c überträgt, der zeilenweise, vgl. Bezugszeichen yₙ, und spaltenweise, vgl. Bezugszeichen xₙ in Fig. 1, vollständig oder partiell auslesbar ist.

Die Anordnung aus Fischaugenobjektiv 1a und CMOS-Sensor 1c verzerrt in per se bekannter Weise. Die Verzerrung durch diese Anordnung ist kalibrierbar und wird als bekannt angenommen und es wird davon ausgegangen, dass Algorithmen f (r, ϕ) bekannt sind, mit denen eine Abbildung auf dem CMOS-Sensor entzerrt werden kann, sofern die Lage der zu entzerrenden Bildpunkte relativ zu einem Mittelpunkt des CMOS-Sensors bekannt ist. Im vorliegenden Fall wird davon ausgegangen, dass beispielsweise eine Entzerrung durch Verwendung von Polarkoordinaten r, ϕ vorgenommen wird. Selbstverständlich sind andere Parameter für Entzerrungsalgorithmen verwendbar.

Das Bildaufnahmemittel 2 kann einen großen Bereich überwachen und beispielsweise eingesetzt sein als Teil eines komplexen Überwachungssystems wie in einer Justizvollzugsanstalt oder dergleichen üblich.

Der CMOS-Sensor 1c ist hochaufgelöst, das heißt er hat mehrere Megapixel Auflösung, was es ermöglicht, in Teilbereichen des Gesamtbildes noch nach Details, wie beispielsweise einem Gesicht, zu suchen.

Ein Bildausschnitt, der dediziert untersucht werden soll, kann über ein Steuermittel 5a von dem Wiedergabemittel 5 vorgegeben werden, indem am Bildaufnahmemittel 2 ein Schwenk-, Neige- und Zoomparameter empfangen wird, der an dem Bildwiedergabemittel 5 beispielsweise über eine Maus- oder Tastatursteuerung vorgebbar ist. Über den PTZ-Parameter wird im Übertragungsmittel 4 des Bildaufnahmemittels 2 ein Bildausschnitt Xₙ....x_{(n + Δ)} sowie yₙ....y_{(n + Δ)} festgelegt, das heißt, es wird bestimmt, welche Spalten und Zeilen des CMOS-Sensors für die Realisierung eines bestimmten Schwenk-Neige-Zoom-Parametersatzes aus dem CMOS-Sensor auszulesen sind. Diese Adressbestimmungsstufe 4a im Übertragungsmittel 4 legt zugleich fest, wie eine gegebene Ecke, hier die rechte untere Ecke, eines gewünschten Bildausschnitts relativ zur Mitte des Sensors liegt. Als Mitte kann die physikalische Sensormitte oder, falls abweichend, die optische und eventuell für jede Kamera separat bestimmte Sensormitte verwendet werden. Bei extremen Fischaugenobjektiven ist die Verwendung der optischen Mitte besonders sinnvoll, das heißt eines Bereiches, auf dem ein Linsenmittelpunktstrahl abgebildet wird. Dies wird hier beispielhaft durch Bestimmung von Parametern r, ϕ dieser Ecke möglich, die die Polarkoordinaten relativ zur Sensormitte angeben.

Das Übertragungsmittel 4 ist dann dazu ausgebildet, Daten aus dem CMOS-Sensor an der bestimmten Adresse, das heißt aus den errechneten Zeilen und Spalten auszulesen und einen entsprechenden Bildausschnitt zu bestimmen. Dieser Bildausschnitt ist entsprechend der optischen Verzerrung selbst verzerrt, wie am Gesicht dargestellt ist. Die zu übertragenden Bilddaten werden für die Übertragung zusammengestellt mit den Parametern r, ϕ, anhand derer bei im Wiedergabemittel bekannter Entzerrungsfunktion f (r, ϕ), vergleiche Stufe 8, eine Entzerrung vorgenommen werden kann.

Die Bilddaten und die eine Entzerrung ermöglichende Zusatzinformation werden in einer Komprimierungsstufe 7 komprimiert und dann über eine Leitung 9 an das Wiedergabemittel 5 übertragen. Im Wiedergabemittel 5 ist eine Decodiervorrichtung zur Entkomprimierung der codierten Daten vorgesehen sowie eine Entzerrstufe 11, in welcher das verzerrt aufgenommene Bild 11 entzerrt werden kann gemäß der bekannten Entzerrfunktion f (r, ϕ) und den übertragenen Parametern r, ϕ. Die entzerrten Bilddaten können auf einem Monitor 12 dargestellt werden.

Es ist einsichtig aus dem Vorhergehenden, dass mit der Überwachungsvorrichtung der vorliegenden Erfindung Bilder hochaufgelöst im Bildaufnahmemittel 2 aufgenommen werden können und dann durch das Übertragungsmittel 4 ausgewählte Bildausschnitte zusammen mit entzerrungsrelevanter Information, gegebenenfalls in komprimierter Form, vgl. Stufe 7, übertragen werden können, was einen Übertragungskanal 9 nicht mit großen Übertragungsbandbreiten belastet. Da für die Entzerrung der verzerrt aufgenommenen Bildausschnitte nur wenig Information übertragen werden muss, wenn die Entzerrfunktion f (r, ϕ) einmal am Wiedergabemittel bekannt ist, wird somit eine erhebliche Reduzierung der Rechenlast im Bildaufnahmemittel 2 und eine Verringerung der Übertragungsbandbreite auf dem Kanal 9 erreicht, obgleich ein Benutzer über die Steuerung 5a einen gewünschten Ausschnitt durch Vorgabe von PTZ-Parametern ohne weiteres steuern kann.

Es sei erwähnt, dass es möglich ist, in einem aufgezeichneten Bildausschnitt-Datenstrom eventuell eine weitere Selektion durch Heranzoomen und/oder Schwenken durchzuführen, wobei durch Bezugnahme auf die Entzerrungsinformationen auch dann eine Bildentzerrung der Bildausschnitte von Bildausschnitten möglich ist.

Es sei erwähnt, dass nicht nur exakt der momentan tatsächlich minimal gewünschte Ausschnitt übertragen werden muss, sondern ein erweiterter Ausschnitt übertragen werden kann, so dass ein gegenüber dem aktuell gewünschten Ausschnitt erwarteter Ausschnitt erhalten und/oder gespeichert wird. Auch hier ist eine Entzerrung erfindungsgemäß möglich.

## Patentansprüche

1. Überwachungsanordnung (1) mit
einem Bildaufnahmemittel (2),
das
zur Aufnahme von
bewegten,
optisch verzerrten,
aus einer Vielzahl von Pixeln bestehenden
digitalen
Weitwinkel-Bildern (3)
einen adressierbaren CMOS- Bildsensor (1c)
aufweist,
einem
Bildausschnitte
der optisch verzerrt aufgenommenen Bilder
entzerrt wiedergebenden
Wiedergabemittel (5),
und
einem Übertragungsmittel (4), das
für eine bidirektionale Kommunikation
zur Übertragung
von Bildinformationen
aus dem Bildaufnahmemittel (2)
an das
Bildausschnitte
der optisch verzerrt aufgenommenen Bilder
entzerrt wiedergebende
Wiedergabemittel (5)
und
zur Übertragung
von Steuerinformation
an das Bildaufhahmemittel (2)
ausgebildet ist,
**dadurch gekennzeichnet, dass**
am Bildaufnahmemittel (2)
ein Mittel zur Ablage von kameraspezifischer Geometrieentzerrungsinformation vorgesehen ist
und
das Übertragungsmittel (4)
zur wiederholten Übertragung der Geometrieentzerrungsinformation ausgebildet ist
und dazu ausgebildet ist,
bei der bidirektionalen Kommunikation
PTZ-Sollparameter entgegenzunehmen,
wobei
anhand dieser Parameter
Bildausschnitte
gemäß der
Zeilen- und
Spaltenbereiche des Bildsensors zu bestimmen und
dann zoomparameterabhängig Pixel zusammenzufassen sind,
und
weiter dazu ausgebildet ist,
auf diesen Bildausschnitten basierende Bilddatenströme
für die differenzkomprimierte Übertragung bereitzustellen,
und mit
einer Bildausschnittsentzerrung ermöglichenden, PTZ-parameterabhängigen Zusatzinformation
zu übertragen,
wobei
am Wiedergabemittel (5) ein Ablagemittel
für
die Bildausschnittsentzerrung ermöglichende kameraspezifische Geometrieentzerrungsinformation vorgesehen ist,
um
dort
eine Entzerrung
unter Berücksichtigung
der kameraspezifischen Geometrieentzerrungsinformation und
der PTZ-parameterabhängigen Zusatzinformation zu ermöglichen.

2. Überwachungsanordnung (1) nach dem vorhergehenden Anspruch, **dadurch gekennzeichnet, dass** das Bildaufhahmemittel (2) ein Weitwinkelobjektiv mit einem Sichtwinkel größer 90°, insbesondere ein Fischaugenobjektiv, aufweist.

3. Überwachungsanordnung (1) nach einem der vorhergehenden Ansprüche, **dadurch gekennzeichnet, dass** das Bildaufhahmemittel (2) zur wiederholten Aufnahme von bewegten Bildern, insbesondere mit einer Bildwiederholfrequenz ≥ 1 Hz, bevorzugt ≥ 5 Hz, insbesondere bevorzugt ≥ 10 Hz ausgelegt ist.

4. Überwachungsanordnung (1) nach einem der vorhergehenden Ansprüche, **dadurch gekennzeichnet, dass** das Bildaufnahmemittel (2) zur digitalen Aufnahme hochaufgelöster Bilder, bevorzugt mit wenigstens (1, 2), insbesondere bevorzugt mit wenigstens 3 Megapixeln ausgerüstet ist.

5. Überwachungsanordnung (1) nach einem der vorhergehenden Ansprüche, **dadurch gekennzeichnet, dass** das Übertragungsmittel (4) zur Übertragung von Bildinformationen über einen bandbreitenbegrenzten Kanal (9), insbesondere LAN, WLAN oder per Funk, wie über Bluetooth, UMTS, GSM ausgebildet ist und/oder bevorzugt zur Übertragung komprimierter Bildinformationen aus dem Bildaufnahmemittel ausgebildet ist.

6. Überwachungsanordnung (1) nach einem der vorhergehenden Ansprüche,
**dadurch gekennzeichnet, dass**
das Wiedergabemittel (5) mit einem Monitor (12),
insbesondere einem Computermonitor in einer Zentrale,
bevorzugt
einer Zentrale zur Überwachung
von Bildern mehr als eines Bildaufnahmemittels vorgesehen ist
und
zwischen Übertragungs- (4) und Wiedergabemittel (5) ein Speichermittel
zur Speicherung
und/oder Sicherung
der übertragenen Bildinformation
und
der eine Bildausschnittsentzerrung ermöglichenden Zusatzinformation
oder
zur Speicherung entzerrter Bilder
vorgesehen ist.

7. Überwachungsanordnung (1) nach einem der vorhergehenden Ansprüche, **dadurch gekennzeichnet, dass**
das für bidirektionale Kommunikation vorgesehene
Übertragungsmittel (4)
zur Übertragung
von
am Wiedergabemittel (5) bestimmter PTZ-Parameter an das Bildaufnahmemittel (2)
ausgebildet ist.

8. Überwachungsanordnung (1) nach einem der vorhergehenden Ansprüche, **dadurch gekennzeichnet, dass**
sie dazu ausgebildet ist, dass
die bildausschnittangebenden Kenngrößen
von
dem Wiedergabemittel (5)
beziehungsweise
einer Zentrale
über das Übertragungsmittel
an das Bildaufnahmemittel (2)
übertragen werden.

9. Überwachungsanordnung (1) nach einem der vorhergehenden Ansprüche, **dadurch gekennzeichnet, dass** das Übertragungsmittel (4) zur simultanen Übertragung mehrerer Bildausschnitte von ein und demselben Bildaufhahmemittel (2) ausgebildet ist.

10. Überwachungsanordnung (1) nach einem der vorhergehenden Ansprüche, **dadurch gekennzeichnet, dass** das Übertragungsmittel (4) zur Mitübertragung von die Lage des Bildausschnittes im Gesamtbild kennzeichnenden Größen ausgebildet ist.

11. Überwachungsanordnung (1) nach einem der vorhergehenden Ansprüche, **dadurch gekennzeichnet, dass** das Übertragungsmittel (4) zur Übertragung von sektorförmigen und/oder rechteckigen Bildausschnitten ausgebildet ist.

12. Bildwiedergabemittel für eine Überwachungsanordnung, wel
che ein Bildaufnahmemittel (2),
das
zur Aufnahme von
bewegten,
optisch verzerrten,
aus einer Vielzahl von Pixeln bestehenden,
digitalen
Weitwinkel-Bildern (3)
einen adressierbaren CMOS-Bildsensor (1c)
aufweist,
aufweist,
wobei das Bildwiedergabemittel dazu ausgebildet ist,
Bildausschnitte
der optisch verzerrt aufgenommenen Bilder entzerrt wiederzugeben,
und wobei die Überwachungsanordnung
ein Übertragungsmittel (4), das
für eine bidirektionale Kommunikation
zur Übertragung
von Bildinformationen
aus dem Bildaufnahmemittel (2)
an das
Bildausschnitte
der optisch verzerrt aufgenommenen Bilder entzerrt wiedergebende
Bildwiedergabemittel (5)
und
zur Entgegennahme
von Steuerinformation
für das Bildaufnahmemittel (2)
ausgebildet ist,
aufweist,
und wobei am Bildaufnahmemittel (2)
ein Mittel zur Ablage von kameraspezifischer Geometrieentzerrungsinformation vorgesehen ist.
und das Übertragungsmittel (4)
zur wiederholten Übertragung des Geometrieentzerrungsinformation
und dazu ausgebildet ist,
bei der bidirektionalen Kommunikation
PTZ-Sollparameter entgegenzunehmen,
wobei
anhand dieser Parameter
Bildausschnitte
gemäß der
Zeilen- und
Spaltenbreite des Bildsensors
zu bestimmen und
dann zoomparameterabhängig Pixel zusammenzufassen sind,
und wobei das Übertragungsmittel (4)
weiter dazu ausgebildet ist, auf diesen Bildausschnitten basierende Bilddatenströme
für die differenzkomprimierte Übertragung
bereitzustellen
und mit
einer Bildausschnittsentzerrung ermöglichenden,
PTZ-parameterabhängigen Zusatzinformation
zu übertragen,
**dadurch gekennzeichnet, dass**
das Bildwiedergabemittel (5) mit einem Ablagemittel
für
die Bildausschnittsentzerrung ermöglichende kameraspezifische Geometrieentzerrungsinformation versehen ist,
und dazu ausgebildet ist,
unter Berücksichtigung
der kameraspezifischen Geometrieentzerrungsinformation
und
der PTZ-parameterabhängigen Zusatzinformation
eine Entzerrung vorzunehmen.

13. Überwachungskameraanordnung für eine Überwachungsanordnung (1), wobei die Überwachungskameraanordnung gebildet ist mit
einem Bildaufhahmemittel (2),
das
zur Aufnahme von
bewegten,
optisch verzerrten,
aus einer Vielzahl von Pixeln bestehenden,
digitalen
Weitwinkel-Bildern (3)
einen adressierbaren CMOS- Bildsensor (1c)
aufweist,
um
einem
Bildausschnitte
der optisch verzerrt aufgenommenen Bilder
entzerrt wiedergebenden
Wiedergabemittel (5) Bildausschnitte verzerrt aufgenommener Bilder bereitstellen zu können,
und mit einem Übertragungsmittel (4), das
für eine bidirektionale Kommunikation
zur Übertragung
von Bildinformationen
aus dem Bildaufnahmemittel (2)
an das
Bildausschnitte
der optisch verzerrt aufgenommenen Bilder
entzerrt wiedergebende
Wiedergabemittel (5)
und
zur Entgegennahme von
vom Wiedergabemittel
an das Bildaufnahmemittel (2)
übertragener Steuerinformation
ausgebildet ist,
**dadurch gekennzeichnet, dass**
am Bildaufnahmemittel (2)
ein Mittel zur Ablage von kameraspezifischer Geometrieentzerrungsinformation vorgesehen ist
und das Übertragungsmittel
zur Entgegennahme
von von dem Wiedergabemittel
an das Bildaufhahmemittel zu übertragender Steuerinformation
ausgebildet ist,
und das Übertragungsmittel (4) weiter
zur wiederholten Übertragung der Geometrieentzerrungsinformation
und dazu ausgebildet ist,
bei der bidirektionalen Kommunikation
PTZ-Sollparameter entgegenzunehmen,
wobei
anhand dieser Parameter
Bildausschnitte
gemäß der
Zeilen- und
Spaltenbereiche des Bildsensors
zu bestimmen und dann
zoomparameterabhängig Pixel zusammenzufassen sind,
und
weiter dazu ausgebildet ist,
auf diesen Bildausschnitten basierende Bilddatenströme
für die differenzkomprimierte Übertragung
bereitzustellen,
und mit
einer Bildausschnittsentzerrung ermöglichenden, PTZ-parameterabhängigen Zusatzinformation
zu übertragen,
damit
am Wiedergabemittel (5)
eine Entzerrung
unter Berücksichtigung
der kameraspezifischen Geometrieentzerrungsinformation
und
der PTZ-parameterabhängigen Zusatzinformation ermöglicht ist.

## Claims

1. Surveillance system (1) having
an image recording means (2), which has an addressable CMOS image sensor (1c) for recording moving, optically distorted, digital, wide-angle images (3) consisting of a plurality of pixels,
a reproduction means (5) which reproduces, in a straightened form, image details of the images which have been recorded with optical distortion, and a transmission means (4), which, for bidirectional communication, is designed for transmission of image information from the image recording means (2) to the reproduction means (5) which reproduces, in a straightened form, image details of the images which have been recorded with optical distortion, and is designed for transmission of control information to the image recording means (2),
**characterized in that**,
a means for storing camera-specific geometry distortion correction information is provided on the image recording means (2)
and
the transmission means (4) is designed for repeated transmission of the geometry distortion correction information, and is designed to receive PTZ setpoint parameters during the bidirectional communication,
wherein these parameters can be taken as a basis for determining image details according to the line and column areas of the image sensor and then for combining pixels on a zoom parameter basis,
and is further designed
to provide image data streams based on these image details for the difference-compressed transmission, and to transmit them with PTZ-parameter-dependent additional information allowing image detail distortion correction,
wherein a storage means for the camera-specific geometry distortion correction information allowing image detail distortion correction is provided on the reproduction means (5), in order to allow distortion correction in said storage means taking into consideration the camera-specific geometry distortion correction information and the PTZ-parameter-dependent additional information.

2. Surveillance system (1) according to the preceding claim, **characterized in that** the image recording means (2) has a wide-angle objective with a viewing angle of more than 90°, in particular a fish-eye objective.

3. Surveillance system (1) according to one of the preceding claims, **characterized in that** the image recording means (2) is designed for repeated recording of moving images, in particular with an image repetition frequency of ≥ 1 Hz, preferably ≥ 5 Hz, in particular preferably ≥ 10 Hz.

4. Surveillance system (1) according to one of the preceding claims, **characterized in that** the image recording means (2) is preferably equipped with at least (1, 2), in particular preferably with at least 3 megapixels for digital recording of high-resolution images.

5. Surveillance system (1) according to one of the preceding claims, **characterized in that** the transmission means (4) is designed for transmission of image information via a limited-bandwidth channel (9), in particular LAN, WLAN or by radio, for example via Bluetooth, UMTS, GSM and/or is designed for transmission of compressed image information from the image recording means.

6. Surveillance system (1) according to one of the preceding claims, **characterized in that** the reproduction means (5) is provided with a monitor (12), in particular a computer monitor in a control center, preferably a control center for monitoring of images from more than one image recording means, and a storage means for storage and/or backup of the transmitted image information and of the additional information which allows image detail distortion to be corrected, or for storage of images whose distortion has been corrected is provided between the transmission means (4) and the reproduction means (5).

7. Surveillance system (1) according to one of the preceding claims, **characterized in that** the transmission means (4), which is provided for bidirectional communication, is designed for transmission of PTZ parameters defined at the reproduction means (5) to the image recording means (2).

8. Surveillance system (1) according to one of the preceding claims, **characterized in that** it is designed to transmit the characteristic variables which indicate an image detail from the reproduction means (5), for example a control center, to the image recording means (2) via the transmission means.

9. Surveillance system (1) according to one of the preceding claims, **characterized in that** the transmission means (4) is designed for simultaneous transmission of a plurality of image details from one and the same image recording means (2).

10. Surveillance system (1) according to one of the preceding claims, **characterized in that** the transmission means (4) is designed for joint transmission of variables which characterize the position of the image detail in the overall image.

11. Surveillance system (1) according to one of the preceding claims, **characterized in that** the transmission means (4) is designed for transmission of image details in the form of sectors, and/or rectangular image details.

12. image reproduction means for a surveillance system, which has an image recording means (2), which has an addressable CMOS image sensor (1c) for recording moving, optically distorted, digital, wide-angle images (3) consisting of a plurality of pixels,
wherein the image reproduction means is designed to reproduce, in a straightened form, image details of the images which have been recorded with optical distortion, and wherein the surveillance system has a transmission means (4), which, for bidirectional communication, is designed for transmission of image information from the image recording means (2) to the image reproduction means (5) which reproduces, in a straightened form, image details of the images which have been recorded with optical distortion and for reception of control information for the image recording means (2),
and wherein a means for storing camera-specific geometry distortion correction information is provided on the image recording means (2),
and the transmission means (4) is designed for repeated transmission of the geometry distortion correction information and to receive PTZ setpoint parameters during the bidirectional communication,
wherein these parameters can be taken as a basis for determining image details according to the line and column areas of the image sensor and then for combining pixels on a zoom parameter basis,
and wherein the transmission means (4) is further designed to provide image data streams based on these image details for the difference-compressed transmission and to transmit them with PTZ-parameter-dependent additional information allowing image detail distortion correction,
**characterized in that**
the image reproduction means (5) is provided with a storage means for the camera-specific geometry distortion correction information allowing image detail distortion correction,
and is designed
to perform distortion correction taking into consideration the camera-specific geometry distortion correction information and the PTZ-parameter-dependent additional information.

13. Surveillance camera system for a surveillance system (1), wherein the surveillance camera system is formed with an image recording means (2), which has an addressable CMOS image sensor (1c) for recording moving, optically distorted, digital, wide-angle images (3) consisting of a plurality of pixels, in order to be able to provide image details of images which have been recorded with optical distortion to an image reproduction means (5) which reproduces, in a straightened form, image details of the images which have been recorded with optical distortion,
and with a transmission means (4), which, for bidirectional communication, is designed for transmission of image information from the image recording means (2) to the image reproduction means (5) which reproduces, in a straightened form, image details of the images which have been recorded with optical distortion and for reception of control information transmitted from the reproduction means to the image recording means (2),
**characterized in that**
a means for storing camera-specific geometry distortion correction information is provided at the image recording means (2)
and the transmission means is designed for reception of control information to be transmitted from the reproduction means to the image recording means,
and the transmission means (4) is further designed for repeated transmission of the geometry distortion correction information and to receive PTZ setpoint parameters during the bidirectional communication,
wherein these parameters can be taken as a basis for determining image details according to the line and column areas of the image sensor and then for combining pixels on a zoom parameter basis,
and
is further designed to provide image data streams based on these image details for the difference-compressed transmission,
and to transmit them with PTZ-parameter-dependent additional information allowing image detail distortion correction,
so that distortion correction taking into consideration the camera-specific geometry distortion correction information and the PTZ-parameter-dependent additional information is rendered possible on the reproduction means (5).

## Revendications

1. Arrangement de surveillance (1), comprenant
un moyen d'enregistrement d'images (2) qui, pour l'enregistrement d'images en grand angle (3) numériques animées, optiquement déformées et constituées d'une pluralité de pixels, possède un capteur d'images CMOS (1c) adressable,
un moyen de reproduction (5) qui reproduit après correction des portions d'image des images optiquement déformées enregistrées,
et
un moyen de transmission (4) qui est configuré pour une communication bidirectionnelle destinée à la transmission d'informations d'image depuis le moyen d'enregistrement d'images (2) au moyen de reproduction (5) qui reproduit après correction des portions d'image des images optiquement déformées enregistrées et destinée à la transmission d'informations de commande au moyen d'enregistrement d'images (2),
**caractérisé en ce que**
un moyen destiné à déposer des informations de correction géométrique spécifiques à la caméra se trouve sur le moyen d'enregistrement d'images (2)
et
le moyen de transmission (4) est configuré pour la transmission répétée des informations de correction géométrique et il est configuré pour accepter des paramètres de consigne PTZ lors de la communication bidirectionnelle, des portions d'image pouvant être déterminées au moyen de ces paramètres conformément aux plages de lignes et de colonnes du capteur d'images et pouvant ensuite être regroupées en pixels en fonction des paramètres de zoom
et
il est en outre configuré pour fournir des flux de données d'image basés sur ces portions d'image pour la transmission comprimée différentielle et les transmettre avec des informations supplémentaires dépendantes des paramètres PTZ, lesquelles permettent une correction de la portion d'image,
un moyen de dépôt pour les informations de correction géométrique spécifiques à la caméra permettant une correction de la portion d'image se trouvant sur le moyen de reproduction (5) afin d'y rendre possible une correction en tenant compte des informations de correction géométrique spécifiques à la caméra et des informations supplémentaires dépendantes des paramètres PTZ.

2. Arrangement de surveillance (1) selon la revendication précédente, **caractérisé en ce que** le moyen d'enregistrement d'images (2) possède un objectif à grand angle ayant un angle de vision supérieur à 90°, notamment un objectif de type fisheye.

3. Arrangement de surveillance (1) selon l'une des revendications précédentes, **caractérisé en ce que** le moyen d'enregistrement d'images (2) est conçu pour l'enregistrement répété d'images mobiles, notamment avec une fréquence de répétition d'image ≥ 1 Hz, de préférence ≥ 5 Hz, notamment de préférence ≥ 10 Hz.

4. Arrangement de surveillance (1) selon l'une des revendications précédentes, **caractérisé en ce que** le moyen d'enregistrement d'images (2) est équipé pour l'enregistrement numérique d'images à haute résolution, de préférence d'au moins (1,2), notamment de préférence d'au moins 3 mégapixels.

5. Arrangement de surveillance (1) selon l'une des revendications précédentes, **caractérisé en ce que** le moyen de transmission (4) est configuré pour la transmission d'informations d'image par le biais d'un canal (9) limité en largeur de bande, notamment par LAN, WLAN ou radio, comme par le biais du Bluetooth, de l'UMTS, du GSM et/ou est de préférence configuré pour la transmission d'informations d'image compressées depuis le moyen d'enregistrement d'images.

6. Arrangement de surveillance (1) selon l'une des revendications précédentes, **caractérisé en ce que** le moyen de reproduction (5) est pourvu d'un moniteur (12), notamment d'un moniteur informatique dans une centrale, de préférence une centrale destinée à la surveillance d'image de plus d'un moyen d'enregistrement d'images,
et
un moyen de mémorisation destiné à la mémorisation et/ou à la sauvegarde des informations d'image transmises et des informations supplémentaires qui permettent une correction de la portion d'image ou à la mémorisation des images corrigées se trouve entre le moyen de transmission (4) et le moyen de reproduction (5).

7. Arrangement de surveillance (1) selon l'une des revendications précédentes, **caractérisé en ce que** le moyen de transmission (4) conçu pour la communication bidirectionnelle est configuré pour la transmission au moyen d'enregistrement d'images (2) de paramètres PTZ défini au niveau du moyen de reproduction (5).

8. Arrangement de surveillance (1) selon l'une des revendications précédentes, **caractérisé en ce qu'**il est configuré pour que les grandeurs caractéristiques indiquant la portion d'image soient transmises du moyen de reproduction (5) ou d'une centrale au moyen d'enregistrement d'images (2) par le biais du moyen de transmission.

9. Arrangement de surveillance (1) selon l'une des revendications précédentes, **caractérisé en ce que** le moyen de transmission (4) est configuré pour la transmission simultanée de plusieurs portions d'image d'un seul et même moyen d'enregistrement d'images (2).

10. Arrangement de surveillance (1) selon l'une des revendications précédentes, **caractérisé en ce que** le moyen de transmission (4) est configuré pour la transmission conjointe de grandeurs qui caractérisent la position de la portion d'image dans l'image totale.

11. Arrangement de surveillance (1) selon l'une des revendications précédentes, **caractérisé en ce que** le moyen de transmission (4) est configuré pour la transmission de portions d'image en forme de secteurs et/ou rectangulaires.

12. Moyen de reproduction d'images pour un arrangement de surveillance (1),
lequel possède un moyen d'enregistrement d'images (2) qui, pour l'enregistrement d'images en grand angle (3) numériques animées, optiquement déformées et constituées d'une pluralité de pixels, possède un capteur d'images CMOS (1c) adressable,
le moyen de reproduction d'images étant configuré pour reproduire après correction des portions d'image des images optiquement déformées enregistrées,
et
l'arrangement de surveillance possédant un moyen de transmission (4) qui est configuré pour une communication bidirectionnelle destinée à la transmission d'informations d'image depuis le moyen d'enregistrement d'images (2) au moyen de reproduction d'image (5) qui reproduit après correction des portions d'image des images optiquement déformées enregistrées et destinée à accepter des informations de commande pour le moyen d'enregistrement d'images (2),
et un moyen destiné à déposer des informations de correction géométrique spécifiques à la caméra se trouvant sur le moyen d'enregistrement d'images (2)
et le moyen de transmission (4) est configuré pour la transmission répétée des informations de correction géométrique et il est configuré pour accepter des paramètres de consigne PTZ lors de la communication bidirectionnelle, des portions d'image pouvant être déterminées au moyen de ces paramètres conformément aux plages de lignes et de colonnes du capteur d'images et étant ensuite regroupées en pixels en fonction des paramètres de zoom
et
le moyen de transmission (4) étant en outre configuré pour fournir des flux de données d'image basés sur ces portions d'image pour la transmission comprimée différentielle et pour les transmettre avec des informations supplémentaires dépendantes des paramètres PTZ, lesquelles permettent une correction de la portion d'image,
**caractérisé en ce que**
le moyen de reproduction d'image (5) est pourvu d'un moyen de dépôt pour les informations de correction géométrique spécifiques à la caméra permettant une correction de la portion d'image et il est configuré pour effectuer une correction en tenant compte des informations de correction géométrique spécifiques à la caméra et des informations supplémentaires dépendantes des paramètres PTZ.

13. Arrangement de caméra de surveillance pour un arrangement de surveillance (1), l'arrangement de caméra de surveillance étant formé avec
un moyen d'enregistrement d'images (2) qui, pour l'enregistrement d'images en grand angle (3) numériques animées, optiquement déformées et constituées d'une pluralité de pixels, possède un capteur d'images CMOS (1c) adressable,
afin de pouvoir fournir des images enregistrées déformées à un moyen de reproduction d'images (5) qui reproduit après correction des portions d'image des images optiquement déformées enregistrées,
et
comprenant un moyen de transmission (4) qui est configuré pour une communication bidirectionnelle destinée à la transmission d'informations d'image depuis le moyen d'enregistrement d'images (2) au moyen de reproduction d'image (5) qui reproduit après correction des portions d'image des images optiquement déformées enregistrées et destinée à accepter des informations de commande transmises par le moyen de reproduction d'image au moyen d'enregistrement d'images (2),
**caractérisé en ce que**
un moyen destiné à déposer des informations de correction géométrique spécifiques à la caméra se trouve sur le moyen d'enregistrement d'images (2)
et le moyen de transmission est configuré pour accepter des informations de commande à transmettre par le moyen de reproduction d'image au moyen d'enregistrement d'images
et le moyen de transmission (4) est en outre configuré pour la transmission répétée des informations de correction géométrique et il est configuré pour accepter des paramètres de consigne PTZ lors de la communication bidirectionnelle, des portions d'image étant déterminées au moyen de ces paramètres conformément aux plages de lignes et de colonnes du capteur d'images et étant ensuite regroupées en pixels en fonction des paramètres de zoom
et
il est en outre configuré pour fournir des flux de données d'image basés sur ces portions d'image pour la transmission comprimée différentielle et pour les transmettre avec des informations supplémentaires dépendantes des paramètres PTZ, lesquelles permettent une correction de la portion d'image,
afin qu'une correction soit possible au niveau du moyen de reproduction d'image (5), en tenant compte des informations de correction géométrique spécifiques à la caméra et des informations supplémentaires dépendantes des paramètres PTZ.
